Europäisches Patentamt

European Patent Office

Office européen des brevets

(11) Publication number: 0 449 166 A2

## EUROPEAN PATENT APPLICATION

(21) Application number: 91104648.0

(22) Date of filing: 25.03.91

(51) Int. Cl.5: G01N 27/333

(30) Priority: 30.03.90 IT 1989490

(43) Date of publication of application:
02.10.91 Bulletin 91/40

(84) Designated Contracting States:
AT BE CH DE DK ES FR GB GR LI LU NL SE

(71) Applicant: CENTRO SVILUPPO MATERIALI S.p.A.
P.O. Box 10747 Via di Castel Romano 100-102
I-00129 Roma(IT)

(72) Inventor: Bazzoni, Bruno
Via San Vittore, 39
I-20123 Milan(IT)
Inventor: Derchi, Domenico
Via Ovidio, 84
I-00040 Pomezia (Prov. Rome)(IT)
Inventor: Novaro, Ezio
Circonvallazione Clodia, 169
I-00195 Rome(IT)
Inventor: Tomellini, Renzo
Via Tonoli, 10
I-00151 Rome(IT)

(74) Representative: Gervasi, Gemma, Dr.
NOTARBARTOLO & GERVASI Srl 33, Viale
Bianca Maria
I-20122 Milano(IT)

(54) Device for measuring the pH of liquid films.

(57) The proposed device is suitable for measuring the pH of liquid films or limited volumes of electrolyte solutions and comprises a miniaturized electrode (11) made of a selected material sensible to the pH, which is put into contact with the electrolyte, a reference electrode (13) and preferably a polymeric saline bridge (12), it too in contact with the electrolyte and operatively connected with the reference electrode (11).

FIG. 1

## FIELD OF THE INVENTION

The invention relates to an electrochemical device for the pH measurement in electrolytic solutions.

## PRIOR ART

The pH represents one of the main magnitudes for the chemical characterization of liquid systems. A systematic determination of the pH is carried out in sectors ranging from chemistry to medicine, ecology, food industry etc.

The pH measurement is generally carried out electrochemically, and in particular by means of a device, which is known as glass electrode, namely an electrode manufactured with a glass membrane endowed with selectivity to ion $H^+$. The measuring system consists, in the aggregate, of a galvanic chain formed by the glass electrode and by a reference electrode plunged in the solution, the pH of which is to be measured; the measure of the electromotive force of the cell so prepared is related, by means of calibration, to the solution pH.

Besides the glass electrode, which is the most commonly used device, these are other electrodes sensible to the pH. One of the most studied electrodes is surely the antimony (Sb) electrode, which in a form of realization, the so-called stick-like realization, is prepared by using an antimony rod optionally cemented in a glass tube and superficially pretreated. The antimony electrode is sensible to the pH, in a range orientatively from 2 to 12, but it is subject to corrosion with formation of oxides which tend to alter the measured potential values.

Another metal electrode is the iridium electrode, the use of which for measuring the pH was started in 1942 by Perley and Godshalk, and which was proposed in the biological field, where miniaturization is required, as an alternative to the little reliable Sb electrode.

In more recent years there has been studied a series of electrodes made of oxides of noble and non-noble metals, such as platinum, iridium, palladium, ruthenium, titanium, zirconium, etc., which exhibit a Nernst dependence of the electrode potential on the pH equal to -59 mV per pH unit.

In this kind of systems, the electrode can consist of a metal element, on which, by means of a proper process, an oxide film of the same metal has been formed, as actually occurs in the case of the antimony electrode, or - as an alternative - the oxide layer can be deposited onto an element of a different metal, acting as a metal base (typically titanium).

An advantage of the metal electrodes, other than the glass electrode, resides in an easy miniaturization of the electrode, which, for example, can be produced in the form of a thin wire, a lamina, etc. Furthermore, the electrodes of the type consisting of an oxide of a few metals, for example iridium, are characterized by a high stability to chemical aggressive conditions, mainly in the acid field.

The miniaturization of the electrode and the chemical stability of the electrode represent important features when limited electrolyte volumes are available, as may occur, for example, when the pH of liquid films is to be measured.

A particularly interesting and topical case is that of the pH of rain precipitations; in these cases, the measurement is carried out on rain water samples in a volume as is sufficient to effect the measurement by means of the glass electrode. Thereby it is possible to obtain a water dilution in the time; that is of considerable importance in the case of acid rains, for which the maximum acidity values are observed in the first instants of the rain precipitation, namely when the effect of the pollutants ($SO_2$, $SO_3$, $NO$, etc) abatement is the maximum; if the pH of a sample collected in a more or less long time is measured, the information about the pH value during the first precipitation instants gets lost.

Other situations where the need for miniaturization is recognized are the ones existing in the field which studies the corrosion phenomena (measure of the pH of condensation films) and in the field of the measurements "in vivo" in the biological sector.

As concerns the pH measurement in the corrosion field, mention is to be made of the case of the monuments and of the monitoring on circulating motorcars, where the use of an antimony electrode was tried, which however, proved to be unreliable, may be due to the self-corrosion of the electrode itself.

## SUMMARY

An object of the present invention is a device suitable for measuring the pH of liquid films and, more in general, of limited volumes of the electrolyte to be measured.

Another object of the invention is a device for the pH measurement, which is chemically stable and reliable also in the long run.

The electrochemical device according to the invention comprises at least a miniaturized electrode of a selected material sensible to the pH, preferably a metal coated with an oxide of a metal, also selected, sensible to the pH, manufactured in a proper form, as a thin filament, a thin lamina, and a reference electrode, in which at least the abovesaid electrode is in contact with the electrolyte to be measured.

According to a preferred solution, the miniaturized electrode consists of a thin wire having a diameter of from 0.2 mm to 2 mm. The use of an oxide electrode, for example titanium and iridium oxide, easily maniaturizable and chemically stable, permits to "withdraw" the potential of an electrolyte film without polluting or diluting the solution.

The reference electrode can be put directly into contact with the electrolyte to be measured, or the solution potential can be transferred from the solution to the reference electrode by means of a saline bridge, preferably obtained by using a polymeric ion-exchange membrane.

The use of a ion-exchange membrane, for example of the type known under the trade-name Nafion, characterized by ionic conductivity and available in the form of strips, or rods or tubes, permits to arrange the reference electrode in an handy position, separated from the solution to be measured, and in contact with an electrolyte of known composition (for example KCl 0.1 N if a silver-silver chloride reference electrode is used). The ohmic falls in the polymeric saline bridge, which is formed, for example, by a wire having a diameter up to 1.25 mm, can be easily rendered negligible by using, as a measuring instrument, a high-impedance voltmeter (indicatively higher than 20 M ohm).

DETAILED DESCRIPTION OF THE INVENTION

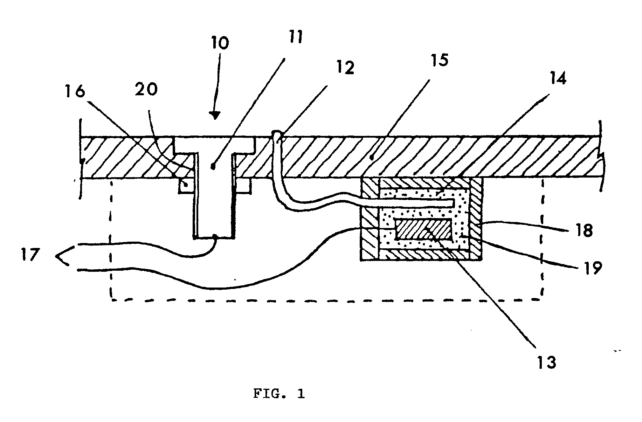

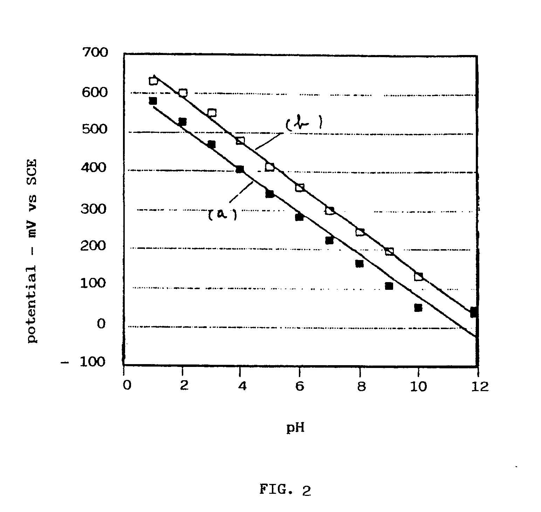

Characteristics and advantages of the invention will be now illustrated making reference to the annexed figures 1 and 2, of which the former schematically shows, as a non-limitative example, an embodiment of the present invention, while the latter represents a diagram of the results of the device calibration tests.

The device, globally indicated with 10 in figure 1, consists of a measure electrode 11, of a reference electrode 13 and of a polymeric saline bridge 12; in the case of liquid film measurements, the device is realized by placing said miniaturized measure electrode 11, in the form of a thin wire or lamina, onto a little PVC plate 15, the flat surface of which is exposed to the electrolyte to be measured (not shown); an end of the saline bridge 12 is arranged on the same surface of plate 15 close to the measure electrode 11, so as to be in contact with said liquid film. Conversely, reference electrode 13 is placed outside with respect to the surface wet by the electrolyte, in a vessel 18 containing a known solution 19, in which the other end of saline bridge 12 is plunged.

The measure electrode 11 is fungi form, with a stem which is introduced into a hole 20 of the plate 15 and then is fixed by means of the nut 16.

In the figures, 17 indicates the electric cables, which convey the electric signal which is indicative of the potential difference between the electrodes 11 and 13, and therefore of the pH of the electrolyte to be measured, and a voltmeter, not shown.

The miniaturized electrode 11, which is sensible to the pH, is composed of an oxide of one of the following metals: ruthenium, iridium, platinum, palladium, titanium, zirconium, manganese, antimony, or of mixtures or solutions thereof, deposited on a nucleus of a metal base, such as titanium, niobium, tantalum.

In the diagram of figure 2, the potential values measured in mV versus the reference potential of a calomel electrode (SCE) are reported in the ordinates, while the corresponding pH values, measured by means of a device equipped with a measuring electrode 11 based on iridium oxide, without polymeric saline bridge (straight line a) and with polymeric saline bridge 12 (straight line b) are reported in the abscissas.

The so composed device 10 must be properly calibrated by means of solutions having a known pH, also in order to take the interliquid potentials -into consideration, which unavoidably form at the interfaces of polymeric saline bridge 12 with the liquid solutions. In the case of electrolytes having a known or an easily measurable composition, the measurement can be carried out by means of a device, which is partially different from the one described hereinbefore, where reference electrode 13, for example of the silver-silver chloride type, is placed directly in contact with the solution, without interposition of polymeric saline bridge 12.

A device like the one illustrated herein can be utilized for monitoring the potential of water stagnating in the box-type parts of circulating motorcars.

The device can be composed of a plastic material plate, on which the measuring electrode sensible to the pH, consisting of a wire having a diameter of 0.8 mm, made of titanium activated with iridium oxide ($IrO_2$), and the polymeric saline bridge, in the form of a 1 mm wide and 0.1 mm thick strip are fixed.

The plate is then mounted through an opening previously prepared in the sheet iron of the box-type component, which opening is then sealed, with the electrodes being arranged on the inner side of said component.

The saline bridge, protected by a suitable tubular sheath, is then connected with a vessel arranged in a position far from the measuring electrode, where the reference electrode is placed. In such a manner it is possible to overcome the difficulty of arranging the reference electrode inside the box-type component, in a position accessible with difficulty.

The proposed device can be manufactured in an extremely miniaturized execution, for applied for examples to the leaves of trees, in parks, forests and woods.

The device can be further perfected for the measurement of water condensates, in a gaseous environment, by coupling it with a thermoelectric cooling device on the surface of plate 15, on which electrodes 11 and 13 are mounted, so as to promote the formation of a condensate water liquid film which is necessary for the measurement, for example like the device illustrated in Italian patent application No. 48528 A/89 filed in the name of the same Applicant, which is based on the use of miniaturized cooling means, in particular a cell operating according to the Peltier's effect.

## Claims

1. An electrochemical device for the measurement of the pH of liquid films, or of limited volumes of an electrolyte solution, characterized in that it comprises at least a miniaturized electrode (11) of a selected material sensible to the pH, and a reference electrode (13), in which at least the abovesaid miniatruzed electrode (11) is in contact with the abovesaid electrolyte solution to be measured.

2. A device according to claim 1, characterized in that it comprises a miniaturized electrode (11) of a selected material sensible to the pH, coated with an oxide of a metal, selected as well and sensible to the pH.

3. A device according to claim 1, characterized in that it comprises also a polymeric saline bridge (12), put into contact with the abovesaid electrolytic solution to be measured and operatively connected with said reference electrode (13).

4. A device according to claim 2, characterized in that the miniaturized electrode (11) consists of a nucleus of a metal base such as titanium, niobium, tantalium, coated with an oxide of one of the following metals: ruthenium, iridium, platinum, palladium, titanium, zirconium, manganese, antimony.

5. A device according to claims 1 and 2, characterized in that abovesaid miniaturized electrode (11) is coated with mixtures or solutions of oxides of the following metals: ruthenium, iridium, platinum, palladium, titanium, zirconium, manganese, antimony.

6. A device according to claim 1, characterized in that the abovesaid miniaturized electrode consists of a thin wire having a diameter of from 0.2 mm to 2 mm.

7. A device according to claim 1, characterized in that abovesaid miniaturized electrode (11) is mounted on a PVC supporting plate (15).

8. A device according to claim 1, characterized in that it is operatively connected with a cooling device of the thermoelectric type, which is suited to promote the condensation of aqueous films.

FIG. 1

FIG. 2